# EUROPEAN PATENT SPECIFICATION

(11) **EP 1 887 679 B1**
(45) Date of publication and mention of the grant of the patent: **02.10.2013**
(21) Application number: 06254153.7
(22) Date of filing: 08.08.2006
(51) Int. Cl.: H02K 41/035

(54) **Actuator**
Aktuator
Actionneur

(43) Date of publication of application: 13.02.2008
(73) Proprietor: SELEX ES LTD, Basildon, Essex SS14 3EL (GB)
(72) Inventor: Craig, Ian Muir, West Lothian, EH52 5QT (GB)
(74) Representative: Wojcik, Lucy Eleanor

(56) References cited:
- DE-B- 1 119 992
- GB-A- 789 726
- JP-A- 10 112 968
- JP-A- 61 004 456
- US-A1- 2006 091 733

## Description

The present invention relates to an actuator. In particular the present invention relates to an actuator having improved acceleration for payloads at an optimum volume and mass of actuator.

Typical moving coil assembly actuators utilise radial magnets in the field structure, or axial central magnets. A typical loudspeaker design uses an annular axial magnet. Production of large payload acceleration with little electrical power requires a large radial magnetic flux. To increase the magnetic flux of such designs requires that the external dimensions of the actuator be increased. This may not be an option as the space required for an increased size actuator may not be available, so generally a compromise or work around has to be found. A description of such an actuator can be found in JP 61 004456 A.

The present invention seeks to mitigate the problems associated with such a design of actuator.

According to the invention there is provided an actuator comprising a field structure assembly comprising an arrangement of permanent magnets and magnetically soft components and a moving coil assembly including a coil, the magnets forming a magnet assembly, wherein the field structure assembly further comprises a hollow cylindrical structure having a closed end and an open end wherein a cylindrical pole piece is positioned along the central axis of the field structure assembly and defines a radial space between an outer surface of the pole piece and the inner surface of a field outer pole, characterised in that the magnet assembly comprises a conical magnet and a plurality of segmented ring magnets, wherein the upper face of the conical magnet abuts the lower surface of the pole piece (260) while the lower face of the conical magnet (210) abuts the inward-facing surface of the closed end of the field outer pole and wherein the inner radial surfaces of the ring magnet segments abut the outer surface of the pole piece and the outer radial surfaces of the ring magnet segments abut the inner cylindrical walls of the field outer pole and wherein the lower surface of the ring magnet segments (220) are inclined to cooperate with the inclined circumferential face of the conical magnet (210) such that these faces abut.

The actuator of the present invention includes a magnetic assembly which allows a larger air gap to be formed in a field structure of such an actuator, allowing the coil assembly greater movement within the field structure. Such an actuator can therefore have a more optimal overall mass and volume, allowing it to fit into restricted spaces, and the moving coil assembly as part of an angular motion mechanism can travel through a relatively large angle respective to the fixed part. Further, the higher magnetic flux provided by the magnetic assembly is increased relative to that of conventional known designs.

According to the invention there is further provided a method of manufacture of an actuator comprising a field structure assembly comprising an arrangement of permanent magnets and magnetically soft components and a moving coil assembly including a coil, the magnets forming a magnet assembly, wherein the field structure assembly further comprises a hollow cylindrical structure having a closed end and an open end wherein a cylindrical pole piece is positioned along the central axis of the field structure assembly and defines a radial space between an outer surface of the pole piece and the inner surface of a field outer pole; the method comprising the steps of (a) fixing a conical magnet to a closed end of a cylindrical field structure; (b) fixing a plurality of segments of a ring magnet to a portion of an inner surface of the cylindrical field structure and to the conical magnet; (c) fixing a portion of a surface of a cylindrical pole piece to the conical magnet and the segments of the ring magnet, such that the upper face of the conical magnet abuts the lower surface of the pole piece while the lower face of the conical magnet abuts the inward-facing surface of the closed end of the field outer pole and the inner radial surfaces of the ring magnet segments abut the outer surface of the pole piece and the outer radial surfaces of the ring magnet segments abut the inner cylindrical walls of the field outer pole and the lower surface of the ring magnet segments are inclined to cooperate with the inclined circumferential face of the conical magnet such that these faces abut.

Specific embodiments of the invention will now be described, by way of example only and with reference to the accompanying drawings that have like reference numerals, wherein:-
Figure 1 is a diagram illustrating an actuator according to the present invention;
Figure 2 is a diagram showing a cross-section of the actuator according to the present invention as shown in Figure 1; and
Figure 2A is a diagram showing a plan view of the actuator according to the present invention as shown in Figures 1 and 2.

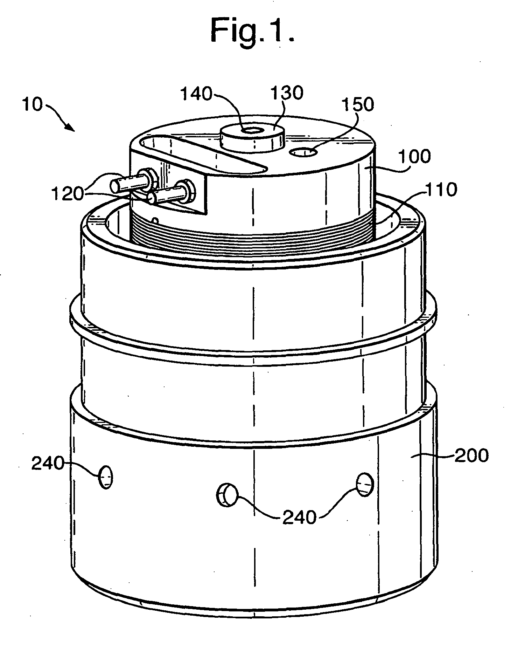

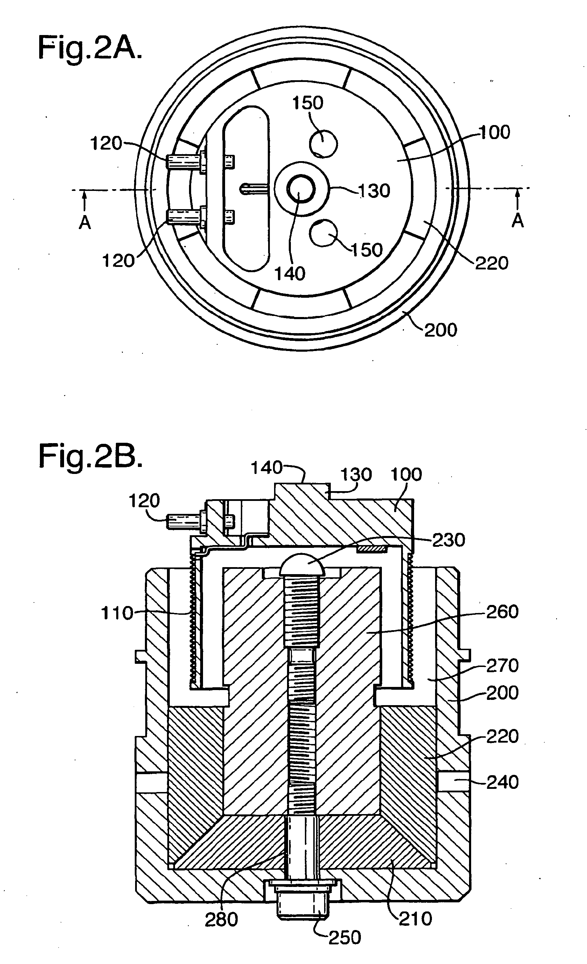

A specific embodiment of the invention is shown in Figures 1 to 3. The actuator 10 consists of two portions: a field structure assembly 200 and a coil assembly 100.

The field structure assembly 200 is a hollow cylindrical structure formed with a closed end, the closed end having a centrally-located hole 280. Along the central axis of the field structure assembly 200, there is positioned a cylindrical pole piece 260 which defines a radial space 270 between an outer surface of the pole piece 260 and the inner surface of the field outer pole 290. A retaining screw 250 is fixed through both the centrally-located hole 280 in the closed end of the field outer pole 290, and the cylindrical pole piece 260.

In the radial space 270 located towards the closed end of the field outer pole 290 there is located an arrangement of permanent magnets that form an inwardly-facing single pole face. The magnet assembly is formed from a conical magnet 210 and several segments of a ring magnet 220. The conical magnet 210 has an inclined circumferential face. The upper face of the conical magnet 210 abuts the lower surface of the pole piece 260 while the lower face of the conical magnet 210 abuts the inward-facing surface of the closed end of the field outer pole 290. The ring magnet segments 220 are provided having inner radial surfaces abutting the outer surface of the pole piece 260 and outer radial surfaces abutting the inner cylindrical walls of the field outer pole 290. The lower surfaces of the ring magnet segments 220 are inclined to co-operate with the inclined circumferential face of the conical magnet 210 such that these faces abut. The conical magnet 210 and ring magnet segments 220 are fixed in place with adhesive.

Towards the open end of the radial space 270 between the inner surface of the field outer pole 290 and the outer surface of the pole piece 260, an air gap is formed.

The coil assembly 100 is a hollow cylindrical structure with one end closed, arranged to fit within the air gap defined at the open end of the radial space 270 between the inner surface of the field outer pole 290 and the outer surface of the pole piece 260. Around the outer surface of the hollow cylindrical structure a coil 110 is provided. The cylindrical structure is selected from a material that has good thermal conductivity but is electrically non-conductive. A ceramic is a class of material that would fit this requirement. This material characteristic eliminates the production of eddy currents which are detrimental to the response time of the actuator assembly.

The field structure 200 is assembled by the following steps: First, the conical magnet 210 is placed against the inward facing surface of the field outer pole 290 and fixed in place with adhesive, the adhesive being applied between the inward facing surface of the closed end of the field outer pole 290 and the conical magnet 210. Next, the segments of the ring magnet 220 are inserted to abut the inner surface of the field outer pole 290 and the inclined circumferential surface of the conical magnet 210 using a specially designed tool that forces the magnets to remain in place. While the magnets are retained in place, they are fixed in place with adhesive injected through adhesive holes 240 provided in the field outer pole 290. Then the pole piece 260 is inserted into the gap defined by the conical magnet 200 and assembled ring magnet segments 220. The pole piece 260 is retained in place with a retaining screw 250 inserted through a centrally located hole 280 in the closed end of the field outer pole 290. An end stop 230 is then inserted into the still open end of the shaft 290 in the pole piece 260 to act as a shock absorber for when, in use, the coil assembly 100 strikes the top of the end stop 230.

Due to the novel magnetic topology created by the above described arrangement of magnets, the actuator 10 can move a mirror connected to the mating point 140 of the coil assembly 100 through a relatively large angle as the large air gap allows a large range of movement and the significant radial magnetic flux allows large payload acceleration at an optimum volume and mass of the actuator 10.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An actuator (10) comprising a field structure assembly (200) comprising an arrangement of permanent magnets and magnetically soft components and a moving coil assembly (100) including a coil (110), the magnets forming a magnet assembly, wherein the field structure assembly (200) further comprises a hollow cylindrical structure having a closed end and an open end wherein a cylindrical pole piece (260) is positioned along the central axis of the field structure assembly (200) and defines a radial space (270) between an outer surface of the pole piece (260) and the inner surface of a field outer pole (290), **characterised in that** the magnet assembly comprises a conical magnet (210) and a plurality of segmented ring magnets (220), wherein the upper face of the conical magnet (210) abuts the lower surface of the pole piece (260) while the lower face of the conical magnet (210) abuts the inward-facing surface of the closed end of the field outer pole (90) and wherein the inner radial surfaces of the ring magnet segments (220) abut the outer surface of the pole piece (260) and the outer radial surfaces of the ring magnet segments (220) abut the inner cylindrical walls of the field outer pole (290) and wherein the lower surface of the ring magnet segments (220) are inclined to cooperate with the inclined circumferential face of the conical magnet (210) such that these faces abut.

2. An actuator (10) according to any preceding claim in which an air gap is defined between a remaining portion of the outer surface of the pole piece (260) and an inside surface of the open end of the field structure (200) and in which the open end of the coil assembly (100) is operable to fit into the air gap between the outer surface of the pole piece (260) and the inside surface of the open end of the field structure (200) so as to create a high magnetic flux in the vicinity of the coil (110).

3. An actuator (10) according to any preceding claim in which the pole piece (260) includes a centrally-located hole (280), the centrally-located hole (280) receiving a retaining screw (250).

4. A method of manufacture of an actuator (10) comprising a field structure assembly (200) comprising an arrangement of permanent magnets and magnetically soft components and a moving coil assembly (100) including a coil (110), the magnets forming a magnet assembly, wherein the field structure assembly (200) further comprises a hollow cylindrical structure having a closed end and an open end wherein a cylindrical pole piece (260) is positioned along the central axis of the field structure assembly (200) and defines a radial space (270) between an outer surface of the pole piece (260) and the inner surface of a field outer pole (290); the method comprising the steps of (a) fixing a conical magnet (210) to a closed end of a cylindrical field structure (200); (b) fixing a plurality of segments of a ring magnet (220) to a portion of an inner surface of the cylindrical field structure (200) and to the conical magnet (210); (c) fixing a portion of a surface of a cylindrical pole piece (260) to the conical magnet (210) and the segments of the ring magnet (220), such that the upper face of the conical magnet (210) abuts the lower surface of the pole piece (260) while the lower face of the conical magnet (210) abuts the inward-facing surface of the closed end of the field outer pole (90) and the inner radial surfaces of the ring magnet segments (220) abut the outer surface of the pole piece (260) and the outer radial surfaces of the ring magnet segments (220) abut the inner cylindrical walls of the field outer pole (290) and the lower surface of the ring magnet segments (220) are inclined to cooperate with the inclined circumferential face of the conical magnet (210) such that these faces abut.

5. A method of manufacture according to claim 4 in which the process of fixing the conical magnet (210) and the plurality of segments of a ring magnet (220) uses an adhesive

6. A method of manufacture of an actuator according to claim 4 or 5 in which the process of fixing the cylindrical pole piece (260) is by bolting the pole piece (260) to the cylindrical field structure (200).

## Patentansprüche

1. Aktuator (10) mit einer Feldstrukturbaugruppe (200), die eine Anordnung aus Permanentmagneten und magnetisch weichen Komponenten sowie eine sich bewegende Spulenbaugruppe (100) umfasst, die eine Spule (110) aufweist, wobei die Magneten eine Magnetbaugruppe bilden, wobei die Feldstrukturbaugruppe (200) ferner eine Hohlzylinderstruktur mit einem geschlossenen Ende und einem offenen Ende umfasst, wobei ein zylindrisches Polstück (260) entlang der Zentralachse der Feldstrukturbaugruppe (200) positioniert ist und einen radialen Raum (270) zwischen einer Außenfläche des Polstücks (260) und der Innenfläche eines äußeren Feldpols (290) definiert,
**dadurch gekennzeichnet, dass**
die Magnetbaugruppe einen konischen Magneten (210) und eine Mehrzahl segmentierter Ringmagnete (220) umfasst, wobei die obere Seite des konischen Magneten (210) an der unteren Fläche des Polstücks (260) angrenzt, während die untere Seite des konischen Magneten (210) an der nach innen weisenden Fläche des geschlossenen Endes des äußeren Feldpols (90) angrenzt, und wobei die radialen Innenflächen der Ringmagnetsegmente (220) an der Außenfläche des Polstücks (260) angrenzen und die radialen Außenflächen der Ringmagnetsegmente (220) an den inneren zylindrischen Wänden des äußeren Feldpols (290) angrenzen, und wobei die untere Fläche der Ringmagnetsegmente (220) schräg gestellt ist, um mit der schräg gestellten Umfangsseite des konischen Magneten (210) zusammenzuwirken, so dass diese Seiten aneinander angrenzen.

2. Aktuator (10) nach einem der vorhergehenden Ansprüche, wobei ein Luftspalt zwischen einem verbleibenden Abschnitt der Außenfläche des Polstückes (260) und einer Innenfläche des offenen Endes der Feldstruktur (200) definiert ist, und wobei das offene Ende der Wicklungsbaugruppe (100) betreibbar ist, in den Luftspalt zwischen der Außenfläche des Polstücks (260) und der Innenfläche des offenen Endes der Feldstruktur (200) zu passen, um so einen hohen magnetischen Fluss in der Nähe der Spule (210) zu erzeugen.

3. Aktuator (10) nach einem der vorhergehenden Ansprüche, wobei das Polstück (260) ein zentral angeordnetes Loch (280) aufweist, wobei das zentral angeordnete Loch (280) eine Halteschraube (250) aufnimmt.

4. Verfahren zum Herstellen eines Aktuators (10) mit einer Feldstrukturbaugruppe (200), die eine Anordnung aus Permanentmagneten und magnetisch weichen Komponenten und eine sich bewegende Spulenbaugruppe (100) umfasst, die eine Spule (110) aufweist, wobei die Magneten eine Magnetbaugruppe bilden, wobei die Feldstrukturbaugruppe (200) ferner eine Hohlzylinderstruktur mit einem geschlossenen Ende und einem offenen Ende umfasst, wobei ein zylindrisches Polstück (260) entlang der Zentralachse der Feldstrukturbaugruppe (200) positioniert ist und einen radialen Raum (270) zwischen einer Außenfläche des Polstücks (260) und der Innenfläche eines äußeren Feldpols (290) definiert; wobei das Verfahren die Schritte umfasst aus (a) Fixieren eines konischen Magneten (210) an einem geschlossenen Ende einer zylindrischen Feldstruktur (200); (b) Fixieren einer Mehrzahl von Segmenten eines Ringmagneten (220) an einem Abschnitt einer Innenfläche der zylindrischen Feldstruktur (200) und an dem konischen Magneten (210); (c) Fixieren eines Abschnitts einer Fläche eines zylindrischen Polstücks (260) an dem konischen Magneten (210) und den Segmenten des Ringmagneten (220), so dass die obere Seite des konischen Magneten (210) an die untere Fläche des Polstücks (260) angrenzt, während die untere Seite des konischen Magneten (210) an der nach innen weisenden Fläche des geschlossenen Endes des äußeren Feldpols (90) angrenzt und die radialen Innenflächen der Ringmagnetsegmente (210) an der Außenfläche des Polstücks (260) angrenzen und die radialen Außenflächen der Ringmagnetsegmente (220) an den inneren zylindrischen Wänden des äußeren Feldpols (290) angrenzen und die untere Fläche der Ringmagnetsegmente (220) schräg gestellt sind, um mit der schräg gestellten Umfangsseite des konischen Magneten (210) zusammenzuwirken, so dass diese Seiten aneinander angrenzen.

5. Herstellverfahren nach Anspruch 4,
wobei der Prozess zum Fixieren des konischen Magneten (210) und der Mehrzahl von Segmenten eines Ringmagneten (220) einen Klebstoff verwendet.

6. Herstellverfahren eines Aktuators nach einem der Ansprüche 4 oder 5,
wobei der Prozess zum Fixieren des zylindrischen Polstückes (260) durch Schrauben des Polstückes (260) an die zylindrische Feldstruktur (200) durchgeführt wird.

## Revendications

1. Actionneur (10) comprenant un ensemble de structure de champ (200) comprenant un agencement d'aimants permanents et de composants magnétiquement doux et un ensemble de bobine mobile (100) incluant une bobine (110), les aimants formant un ensemble d'aimants, dans lequel l'ensemble de structure de champ (200) comprend en outre une structure cylindrique creuse présentant une extrémité fermée et une extrémité ouverte, dans lequel une pièce polaire cylindrique (260) est positionnée le long de l'axe central de l'ensemble de structure de champ (200) et définit un espace radial (270) entre une surface extérieure de la pièce polaire (260) et la surface intérieure d'un pôle extérieur de champ (290), **caractérisé en ce que** l'ensemble d'aimants comprend un aimant conique (210) et une pluralité d'aimants annulaires segmentés (220), dans lequel la face supérieure de l'aimant conique (210) jouxte la surface inférieure de la pièce polaire (260) tandis que la face inférieure de l'aimant conique (210) jouxte la surface qui est orientée vers l'intérieur de l'extrémité fermée du pôle extérieur de champ (290), et dans lequel les surfaces radiales intérieures des segments d'aimant annulaire (220) jouxtent la surface extérieure de la pièce polaire (260) et les surfaces radiales extérieures des segments d'aimant annulaire (220) jouxtent les parois cylindrique intérieures du pôle extérieur de champ (290), et dans lequel les surfaces inférieures des segments d'aimant annulaire (220) sont inclinées de façon à coopérer avec la face circonférentielle inclinée de l'aimant conique (210) de sorte que ces faces se jouxtent.

2. Actionneur (10) selon l'une quelconque des revendications précédentes, dans lequel un entrefer est défini entre une partie restante de la surface extérieure de la pièce polaire (260) et une surface intérieure de l'extrémité ouverte de la structure de champ (200) et dans lequel l'extrémité ouverte de l'ensemble de bobine (100) est fonctionnelle de façon à s'insérer dans l'entrefer entre la surface extérieure de la pièce polaire (260) et la surface intérieure de l'extrémité ouverte de la structure de champ (200) de manière à créer un flux magnétique élevé à proximité de la bobine (110).

3. Actionneur (10) selon l'une quelconque des revendications précédentes, dans lequel la pièce polaire (260) inclut un trou situé au centre (280), le trou situé au centre (280) recevant une vis de fixation (250).

4. Procédé de fabrication d'un actionneur (10) comprenant un ensemble de structure de champ (200) comprenant un agencement d'aimants permanents et de composants magnétiquement doux et un ensemble de bobine mobile (100) incluant une bobine (110), les aimants formant un ensemble d'aimants, dans lequel l'ensemble de structure de champ (200) comprend en outre une structure cylindrique creuse présentant une extrémité fermée et une extrémité ouverte, dans lequel une pièce polaire cylindrique (260) est positionnée le long de l'axe central de l'ensemble de structure de champ (200) et définit un espace radial (270) entre une surface extérieure de la pièce polaire (260) et la surface intérieure d'un pôle extérieur de champ (290) ; le procédé comprenant les étapes consistant à : (a) fixer un aimant conique (210) sur une extrémité fermée d'une structure de champ cylindrique (200) ; (b) fixer une pluralité de segments d'un aimant annulaire (220) sur une partie d'une surface intérieure de la structure de champ cylindrique (200) et sur l'aimant conique (210) ; (c) fixer une partie d'une surface d'une pièce polaire cylindrique (260) sur l'aimant conique (210) et les segments de l'aimant annulaire (220), de sorte que la face supérieure de l'aimant conique (210) jouxte la surface inférieure de la pièce polaire (260) tandis que la face inférieure de l'aimant conique (210) jouxte la surface qui est orientée vers l'intérieur de l'extrémité fermée du pôle extérieur de champ (90) et les surfaces radiales intérieures des segments d'aimant annulaire (220) jouxtent la surface extérieure de la pièce polaire (260) et les surfaces radiales extérieures des segments d'aimant annulaire (220) jouxtent les parois cylindriques intérieures du pôle extérieur de champ (290) et les surfaces inférieures des segments d'aimant annulaire (220) sont inclinées de façon à coopérer avec la face circonférentielle inclinée de l'aimant conique (210) de sorte que ces faces se jouxtent.

5. Procédé de fabrication selon la revendication 4, dans lequel le processus de fixation de l'aimant conique (210) et de la pluralité de segments d'un aimant annulaire (220) utilise un adhésif.

6. Procédé de fabrication d'un actionneur selon la revendication 4 ou 5, dans lequel le processus de fixation de la pièce polaire cylindrique (260) consiste à boulonner la pièce polaire (260) sur la structure de champ cylindrique (200).
